(19) Europäisches Patentamt
European Patent Office
Office européen des brevets

(11) Numéro de publication: **0 404 698 A1**

# (12) DEMANDE DE BREVET EUROPEEN

(21) Numéro de dépôt: **90420290.0**

(22) Date de dépôt: **19.06.90**

(51) Int. Cl.[5]: **C08G 77/46, C08L 83/12, B01D 19/04, D06M 15/643**

(30) Priorité: **22.06.89 FR 8908581**

(43) Date de publication de la demande: **27.12.90 Bulletin 90/52**

(84) Etats contractants désignés: **AT BE CH DE DK ES FR GB GR IT LI LU NL SE**

(71) Demandeur: **RHONE-POULENC CHIMIE**
**25, quai Paul Doumer**
**F-92408 Courbevoie Cédex(FR)**

(72) Inventeur: **Kirk, James**
**32 Ardrossan Road**
**Sea Mill Ayrshire, KA 239 LT(GB)**

(74) Mandataire: **Troillet, Maurice et al**
**RHONE-POULENC INTERSERVICES Service Brevets Chimie Centre de Recherches des Carrières B.P. 62**
**F-69192 Saint-Fons Cédex(FR)**

## (54) Polydiorganosiloxanes organofonctionnels à fonction amino et polyoxyalkylène.

(57) La présente invention concerne des polydiorganosiloxanes organofonctionnels à fonction amino et polyoxyalkylène de formule :

$$
\begin{array}{llllll}
R_3\,SiO( & R\,SiO)_m & (R\,SiO)_n & (RSiO)_p & (R_2SiO)_qSiR_3 & \\
 & | & | & | & & \\
 & (CH_2)_3 & (CH_2)_3 & OR'' & & \\
 & | & | & & & (1) \\
 & X & Y-(OC_2H_4)_a(OC_3H_6)_bOR' & & & \\
 & | & & & & \\
 & NH_2 & & & &
\end{array}
$$

Les polymères de formule (1) sont préparés en deux ou trois étapes faisant intervenir une réaction d'hydrosilylation.

Les polymères de formule (1) sont utilisables notamment comme agent tensio-actif, agent dispersant, additif silicone à une composition adoucissante de rinçage de textiles ou à un antimousse solide pour détergent en poudre.

EP 0 404 698 A1

Xerox Copy Centre

# POLYDIORGANOSILOXANES ORGANOFONCTIONNELS A FONCTION AMINO ET POLYOXYALKYLENE

La présente invention concerne des polydiorganosiloxanes organofonctionnels à fonction amino et polyoxyalkylène, leurs procédés de préparation et leurs applications.

La littérature décrit un très grand nombre de polydiorganosiloxanes à fonction amino ou à fonction polyoxyalkylène et leurs utilisations diverses notamment dans les compositions détergentes, les antimousses, les additifs mousse polyuréthanne, les compositions lustrantes (polish), etc .....

GB-A-1 409 741 et GB-A-1 409 742 décrivent la synthèse de polydiorganosiloxanes aminofonctionnels comportant des groupes alcoxy. Ces produits sont préparés par réaction partielle d'allylamine sur un polydiorganosiloxane porteur de fonction hydrure ≡ SiH en présence d'un catalyseur au platine. On fait ensuite réagir les ≡ SiH résiduels sur un alcool, par exemple l'isopropanol. Ces produits sont utilisés comme additifs de compositions lustrantes résistantes aux détergents.

US-A-4 184 004 décrit un polydiorganosiloxane à fonction époxy et à fonction polyoxyalkylène et son utilisation comme adoucissant textile.

GB-A-2 201 433 décrit l'utilisation d'un polydiorganosiloxane à fonction ammonium et à fonction polyoxyalkylène comme additif à une composition détergente ou de rinçage.

EP-A-58 493 vise l'utilisation de l'association de trois polydiorganosiloxanes fonctionnels (A), (B) et (C), pour le traitement de fibres textiles, (A) comportant à la fois des groupes amino et des groupes polyoxyalkylène. Bien que la définition donnée à (A) soit extrêmement large, EP-A-58 493 ne décrit spécifiquement qu'une huile A particulière de formule :

$Me(Me_2SiO)_{130}(MeFSiO)_3\ (MeGSiO)_{10}SiMe_3$,

avec

$F = -(CH_2)_3-NH(CH_2)_2NH_2$

$G = -(CH_2)_3O(C_2H_4O)_{10}H$

Un but de la présente invention est de proposer un polydiorganosiloxane à fonction amino et polyoxyalkylène de fabrication aisée.

Un autre but de la présente invention est de proposer un polydiorganosiloxane du type ci-dessus, stable en milieu aqueux, à caractère hydrophyle pouvant être aisément mis en émulsion ou en microémulsion et pouvant être, dans certains cas hydrosolubles ou dispersables dans les milieux aqueux.

Un autre but de la présente invention est de proposer un polydiorganosiloxane du type ci-dessus qui soit utilisable comme agent tensio-actif et comme additif dans des compositions détergentes et en particulier dans des compositions de rinçage de linge et comme additif dans un anti-mousse silicone.

Ces buts et d'autres sont atteints par la présente invention qui concerne en effet un polydiorganosiloxane à fonction amino et polyoxyalkylène de formule moyenne :

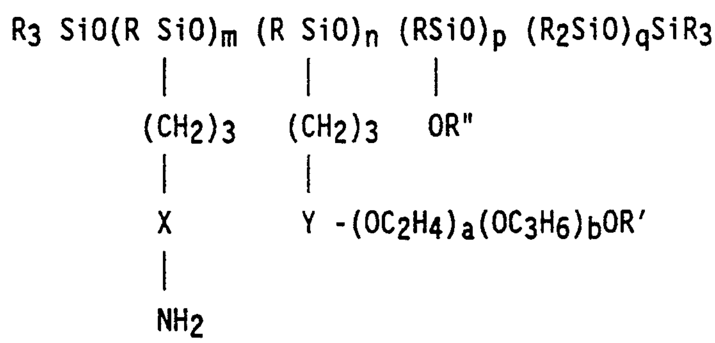

(1)

dans laquelle :

R est choisi parmi les radicaux alkyle en $C_1$-$C_4$, phényle et trifluoro-3,3,3 propyle, au moins 80 % en nombre des radicaux R étant des radicaux méthyle,

X est choisi parmi une simple liaison covalente et le radical divalent de formule :

$- O - CH_2 - CH(OH) - CH_2 - NH - W -$ (2)

Y est choisi parmi une simple liaison covalente et le radical divalent de formule :

$- O - CH_2 - CH - CH_2OCH_3$ (3)

sous réserve que si p = 0 et X est une liaison covalente, Y est le radical de formule (3),

m varie de 1 à 25, de préférence de 1 à 10,

n varie de 1 à 25, de préférence de 1 à 10,
p varie de 0 à 15, de préférence de 1 à 5,
q varie de 5 à 500, de préférence de 10 à 400,
a varie de 0 à 150,
b varie de 0 à 150,
a + b varie de 5 à 200,
W est un radical hydrocarboné divalent ayant de 1 à 6 atomes de carbone tel que - $CH_2$ -, $-(CH_2)_2-$, $-(CH_2)_3-$, $-(CH_2)_6-$,

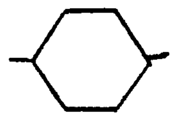, 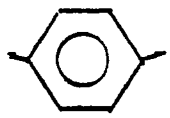,

$-(CH_2)_2-$ est le radical préféré,
R′ est choisi parmi un atome d'hydrogène, un radical alkyle en $C_1$-$C_6$, un radical acyle en $C_1$-$C_6$ et un radical phényle,
R′ est de préférence méthyle de même que le radical R,
R″ est un radical alkyle linéaire ou ramifié en $C_1$-$C_6$, de préférence isopropyle et isobutyle.
En faisant varier notamment le rapport a/b et la somme a + b, il est possible de modifier aisément le caractère hydrophile et le caractère hydrophobe des polymères de formule (1).

Les polymères de formule (1), dans le cas où X est une liaison covalente et Y le radical divalent de formule (3), peuvent être préparés avantageusement de la façon suivante :

On part d'un hydrogénopolydiorganosiloxane de formule :

$R_3SiO(RHSiO)_c\,(R_2SiO)_q\,SiR_3$ (4)

dans laquelle R et q ont la signification donnée ci-dessus et c = m + n + p.

Au cours d'une première étape, on hydrosilyle partiellement les fonctions SiH du polymère (4) en ajoutant une quantité adaptée d'allylamine en présence d'un catalyseur d'hydrosilylation, de préférence un catalyseur au platine.

Les catalyseurs au platine utilisés pour réaliser la réaction d'hydrosilylation des polymères de formule (4) sont amplement décrits dans la littérature, on peut en particulier citer les complexes du platine et d'un produit organique décrit dans les brevets américains US-A-3 159 601, US-A-3 159 602, US-A-3 220 972 et les brevets européens EP-A-57 459, EP-A-188 978 et EPA-A-190 530 et les complexes du platine et d'organopolysiloxane vinylé décrits dans les brevets américains US-A-3 419 593, US-A-3 377 432 et US-A-3 814 730.

Pour faire réagir le polymère de formule (4) sur l'allylamine on utilise généralement une quantité de catalyseur au platine calculée en poids de platine métal comprise entre 5 et 600 ppm, de préférence entre 10 et 200 ppm basés sur le poids de polymère à SiH de formule (4).

La réaction d'hydrosilylation peut avoir lieu en masse ou au sein d'un solvant organique volatil tel que le toluène, l'heptane, le xylène, le tétrahydrofuranne, le tétrachloroéthylène et le white spirit.

Il est généralement souhaitable de chauffer le mélange réactionnel à une température comprise entre 30 et 200 °C pendant le temps nécessaire pour que la réaction soit complète. Par ailleurs il est souhaitable d'ajouter goutte à goutte l'allylamine sur le polymère de formule (4) en solution dans un solvant organique et, de préférence à température de reflux du solvant.

Puis on élimine éventuellement le solvant par exemple par distillation sous pression réduite. Toutefois la solution de polymère obtenu peut être directement utilisée pour la deuxième étape du procédé. Le polymère obtenu répond à la formule :

$R_3SiO(RSiO)_m(RHSiO)_d(R_2SiO)_qSiR_3$ (5)
with on the Si of $(RSiO)_m$:
|
$(CH_2)_3$
|
$NH_2$

R, m et q ayant la signification donnée ci-dessus et d = n + p.

Le polymère de formule (5) peut contenir à titre d'impuretés une petite quantité de motif de formules :

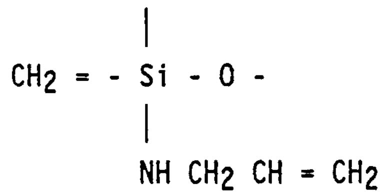

et

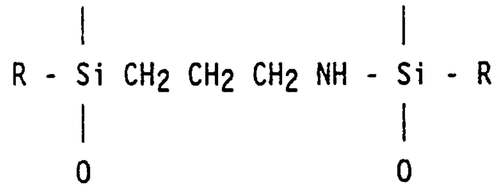

Au cours d'une seconde étape on hydrosilyle tout ou partie des fonctions ≡ SiH résiduelles du polymère de formule (5) avec un polyoxyalkylène insaturé de formule :

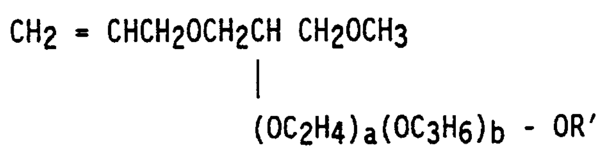

(6)

a, b et R′ ayant la même signification que ci-dessus.

Cette seconde étape est analogue à la première étape. On opère de préférence en milieu solvant organique, de préférence le même que celui utilisé lors de la première étape et on part alors de la solution de polymère (5) obtenu à la fin de la première étape. Il n'est pas alors nécessaire d'ajouter un catalyseur au platine qui est déjà contenu dans cette solution.

Le solvant est éliminé par exemple par distillation sous pression réduite. Le polymère obtenu peut être purifié par exemple par passage sur une colonne absorbante de silice.

Si ce polymère ne contient pas de fonctions ≡ SiH résiduelles, il répond à la formule (1) avec p = 0. Si ce polymère contient des ≡ SiH résiduelles on les fait réagir avec un alcool de formule R″OH, R″ ayant la signification donnée ci-dessus, en présence d'un catalyseur tel que la diéthylhydroxylamine selon l'enseignement des brevets GB-A-1 409 741 et GB-A-1 409 742 précités.

Bien entendu il peut subsister dans le polymère de formule (1), à titre d'impuretés, des motifs de formules :

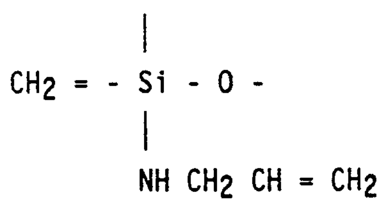

et

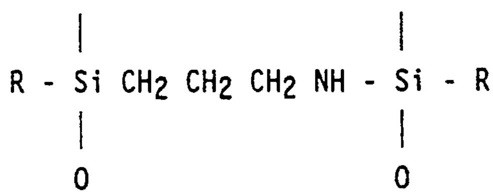

Ces motifs peuvent être bloqués par réaction avec un alcool de formule R″OH en donnant des motifs de formules :

: RSiO et RSiO

| |

OR" $(CH_2)_3NH_2$.

Pour préparer les polymères de formule (1) pour lesquels X est un radical de formule (2), on part d'un polymère de formule (4) tel que défini ci-dessus sur lequel, au cours d'une première étape, on effectue une hydrosilylation partielle au moyen d'un polyoxyalkylène insaturé de formule :

$CH_2 = CHCH_2Y-(OC_2H_4)_a(OC_3H_6)_b OR'$ (7)

dans laquelle Y, a, b et R′ ont la signification donnée ci-dessus pour obtenir le polymère de formule :

$R_3SiO(RHSiO)_e\ (RSiO)_n\ (R_2SiO)_q\ SiR_3$ (8)

|

$(CH_2)_3$

|

$Y - (OC_2H_4)_a\ (OC_3H_6)_bOR'$

dans laquelle R, R′, Y, x, q, a et b ont la signification donnée ci-dessus et e = m + p.

Au cours d'une deuxième étape le polymère de formule (8) est hydrosilylé totalement par l'allylglycidyléther de formule :

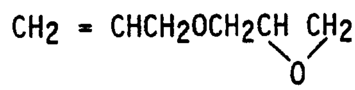

Le polymère obtenu, qui peut être préparé selon l'enseignement de US-A-4 184 004 précité, est éventuellement mis en réaction avec un alcool R″OH dans le cas où il reste des ≡ SiH résiduels. Puis le polymère est ensuite mis en réaction avec un excès molaire d'une diamine de formule $H_2N\ WNH_2$, W ayant la signification donnée ci-dessus et on obtient ainsi le polymère de formule (1).

Le polymère de formule (1) est sensiblement linéaire étant formé pratiquement que de motifs M : $(R_3SiO)$ et D : $(R_2SiO)$.

Toutefois jusqu'à 10 % molaire de motifs T : $(RSiO_{3/2})$ peuvent être présents.

Le polymère de formule (1) peut être hydrosoluble, dispersable dans l'eau ou insoluble dans l'eau froide ou chaude. Généralement on augmente la solubilité dans l'eau en augmentant la teneur pondérale de groupes polyoxyalkylène dans le polymère et en faisant varier le rapport a/b et la somme a + b.

Le polymère de formule (1) peut donc, selon le cas, être utilisé tel quel, en solution dans un solvant organique, en solution ou en dispersion aqueuse, en émulsion et en micro-émulsion.

Les polymères selon l'invention sont en particulier utilisables pour traiter les fibres de verre et les fibres organiques (sizes), traitement et adoucissage textile, comme tensio-actifs, agents hydrofugeants, agents de démoulage, lubrifiants, additifs pour polymère organique en particulier PVC, lubrifiants pour fibres textiles, additif pour polish résistants aux détergents, agents antimousse et démoussant.

Les polymères de formule (1) sont particulièrement utiles en masse ou en solution dans un solvant organique pour traiter les fibres textiles. Ils sont alors de préférence utilisés en association avec une huile $\alpha,\omega$-(dihydroxy)polydiorganosiloxane de viscosité comprise entre 100 et 150 000 mPa.s à 25 °C, dont le radical organique est de préférence méthyle en présence éventuellement d'un catalyseur de condensation tel qu'un sel d'étain.

On utilise alors pour 100 parties de polymère (1), de 10 à 1 000 parties d'huile hydroxylée.

Les polymères selon l'invention sont plus particulièrement utiles d'une part comme agents dispersants dans les antimousses solides pour poudres à laver et, d'autre part comme additif silicone dans les compositions de rinçage de textile associé ou non à un tensio-actif organique, de préférence cationique.

L'antimousse solide pour poudre à laver comporte :

- 100 parties d'une matrice choisie par un polyéthylène glycol, un copolymère polyoxyéthylène/polyoxypropylène, un surfactant solide tel qu'un sorbitan mono- ou tri-stéarate et une cire

solide ainsi que leurs divers mélanges possibles,

- 10 à 80 parties d'une dispersion de silice de pyrogénation ou de précipitation dans une huile silicone généralement une huile polydiméthylsiloxane,
- 1 à 20 parties de polymère de formule (1).

Cet antimousse est préparé de la façon suivante : on mélange à chaud la dispersion de silice/huile polydiméthylsiloxane dans une matrice fondue qui est, soit soluble, soit insoluble, soit dispersible dans l'eau en ajoutant l'agent dispersant qui est le polymère de formule (1) selon l'invention.

Ensuite on refroidit la dispersion fondue, puis on broie la masse solide résultante pour obtenir une poudre s'écoulant bien.

Selon la deuxième application, plus spécifiquement visée, le polymère de formule (1) est utilisé comme additif silicone dans une composition de rinçage, comportant une dispersion aqueuse d'au moins un tensio-actif organique cationique, substantif aux textiles et adoucissant les textiles, tel que décrit dans FR-A-2 318 268, cité comme référence, qui est généralement un sel d'ammonium quaternaire présentant deux radicaux alkyle à longue chaîne, généralement en $C_{12}$-$C_{20}$.

Au moins un polymère de formule (1) est ajouté selon le cas au tensio-actif cationique sous la forme d'une émulsion, d'une dispersion ou d'une solution aqueuse. Le rapport pondéral du tensio-actif organique sur le polymère (1) est compris entre 3/1 et 1/20.

Le bain de rinçage est alors efficace à une teneur en tensio-actif organique, plus polymère de formule (1) comprise entre 15 et 600 ppm, dont au moins 8 ppm de polymère de formule (1).

Dans tout ce qui suit ou ce qui précède, sauf indications contraires, les parties et pourcentages indiqués sont en poids.

Les exemples suivants illustrent l'invention sans en limiter la portée.

## - EXEMPLE 1 :

- 114,4 parties d'un hydrogénopolydiméthylsiloxane de formule moyenne $Me_3SiO(Me_2SiO)_{15}(MeHSiO)_3SiMe_3$ (Me = $CH_3$),
- 100 parties de toluène et
- 0,016 partie de chlorure platineux de bis(diéthylsulfure) sont chauffées à reflux pour éliminer toute l'eau.
- 5 parties d'allylamine sont ajoutées goutte-à-goutte pendant une heure à reflux.

Le reflux est poursuivi pendant encore 45 minutes.

Un échantillon du mélange réactionnel est alors prélevé et présente un équivalent neutralisation de 1 554 et un spectre infra-rouge démontrant la présence de groupe ≡ SiH.

On ajoute alors au mélange réactionnel 136 parties du poly(oxyalkylène) de formule moyenne :

$$CH_2 = CH\ CH_2\ OCH_2\ \underset{\displaystyle |\atop\displaystyle (OCH_2CH_2)_{10} - \{OCH_2CH(CH_3)\}_{0,7} - OH}{CH}\ CH_2\ OCH_3$$

obtenu par réaction de quantités adaptées d'oxyde d'éthylène et d'oxyde de propylène sur l'allylglycidyléther en présence de méthalonate de sodium.

Cette addition est faite sous reflux durant 50 minutes et le mélange réactionnel est chauffé sous reflux pendant encore 1 heure 30 minutes.

Le solvant est éliminé sous vide à 100 °C et une huile jaune de viscosité 100 mPa.s à 25 °C est ainsi obtenue. Cette huile ne contient aucun groupe ≡ SiH résiduel et présente un équivalent neutralisation de 3 480. L'huile est dispersible dans l'eau et présente un point trouble de 53 °C.

## - EXEMPLE 2 :

- 142 parties d'hydrogénopolydiméthylsiloxane de formule moyenne : $MeSiO(Me_2SiO)_{15}(MeHSiO)_3SiMe_3$,
- 100 parties de toluène et
- 0,022 partie de chlorure platineux de bis(diéthylsulfure) sont mélangées et chauffées à reflux,

- 3 parties d'allylamine sont ajoutées goutte-à-goutte pendant minutes à reflux.

Un échantillon du mélange réactionnel est alors prélevé. Après élimination du solvant, cet échantillon présente un équivalent neutralisation de 2 852.

Le spectre IR démontre la présence de groupes ≡ SiH résiduels.

- 195 parties du polyoxyalkylène utilisé à l'exemple 1 sont ajoutés à reflux durant 5 minutes.

Une solution trouble est obtenue qui devient limpide après un reflux de 2 heures 30 minutes.

Au bout de cette période tous les groupes résiduels ≡ SiH ont disparu. Après élimination du toluène, une huile de viscosité 380 mPa.s à 25 °C est obtenue présentant un équivalent neutralisation de 7 400.

Cette huile est dispersable dans l'eau avec un point trouble de 59 °C.

## - EXEMPLE 3 :

On répète exactement le mode opératoire de l'exemple 1 sauf que l'on part de :

- 144,8 parties d'une huile hydrogénopolydiméthylsiloxane de formule moyenne : $Me_3SiO(Me_2SiO)_{14}$-$(MeHSiO)_4SiMe_3$,
- 100 parties de toluène,
- 3 parties d'allyamine et
- 0,016 partie du même catalyseur au platine.

L'échantillon prélevé présente un équivalent neutralisation de 2 900.

On ajoute 270 parties du même polyoxyalkylène pour obtenir finalement une huile de viscosité 302 mPa.s à 25 °C, un équivalent neutralisation de 9 100 et un point trouble de 52 °C.

## - EXEMPLE 4 :

On répète exactement le mode opératoire de l'exemple 1, sauf que l'on part de :

- 477,8 parties d'un hydrogénopolydiméthylsiloxane de formule moyenne : $Me_3SiO(Me_2SiO)_{15}(MeHSiO)$-$_{3,1}SiMe_3$,
- 400 parties de toluène et
- 0,0594 partie du même catalyseur au platine et
- 19,95 parties d'allylamine suivi de l'addition de
- 577 parties du même polyoxyalkylène.

L'huile obtenue a une viscosité de 165 mPa.s à 25 °C, un équivalent neutralisation de 3 390 et un point trouble de 52 °C.

## - EXEMPLE 5 :

On prépare dans un malaxeur une dispersion par mélange de :

- 95 parties d'une huile polydiméthysiloxane bloquée triméthylsiloxy et
- 5 parties d'une silice hydrophobe DEGUSSA SIPERNAT®D10, commercialisée par la Société DEGUSSA.

On mélange alors, à l'état fondu 40 parties de cette dispersion avec 55 parties de polyéthylène glycol de poids moléculaire 6 000 et 5 parties de l'huile silicone obtenue à l'exemple 1.

Le mélange obtenu est refroidi rapidement, par étalement en une pellicule solide de faible épaisseur.

Cette pellicule est broyée en une poudre assez grossière, très fluide, s'écoulant bien.

La poudre est constituée de grains de la dispersion huile silicone/silice, microencapsulée par une matrice solide de polyéthylène glycol qui se disperse aisément dans un milieu aqueux, en donnant un très bon antimousse.

## - EXEMPLE COMPARATIF 6 :

On répète exactement le mode opératoire de l'exemple 5 sauf que l'on n'introduit pas l'huile de l'exemple 1.

Le produit solide obtenu est collant et ne peut être broyé en une poudre s'écoulant bien.

- EXEMPLE 7 :

On répète exactement le mode opératoire de l'exemple 5 sauf qu'à la place du polyéthylène glycol on utilise la même quantité de stéarate de sorbitan SPAN®65, commercialisé par la Société ICI.

On obtient, après broyage, une poudre s'écoulant bien, se dispersant aisément dans l'eau chaude et l'eau froide et constituant un antimousse efficace.

- EXEMPLE 8 :

On établit le profil de hauteur de mousse en fonction du temps et de la température d'une poudre détergente commerciale pour machine à laver automatique ne comportant pas d'antimousse, au moyen d'une machine à laver le linge ZANUSSI®FL811 à ouverture frontale.

On établit le même profil après incorporation de 0,2 % d'huile de l'exemple 1. On observe une diminution sensible du niveau de mousse en particulier à la fin du cycle de lavage haute température/haute agitation.

- EXEMPLE 9 :

162,05 g d'un hydrogénopolydiméthylsiloxane de formule moyenne :
$Me_3SiO(Me_2SiO)_8(MeHSiO)_{3,1}SiMe_3$
sont séchés par mise au reflux dans le toluène pendant 90 minutes. On ajoute 42 ppm (calculés sur le poids de l'huile silicone) du catalyseur au platine utilisé à l'exemple 1 et ensuite 9,98 g d'allylamine ajoutés goutte-à-goutte pendant 1 heure.

Le mélange réactionnel est porté au reflux pendant encore une heure et un échantillon est prélevé. Cet échantillon où le toluène est éliminé, nécessite 13,05 ml d'acide chlorhydrique N/10 pour la neutralisation. On fait ensuite réagir 256,4 g d'un polyoxyoloxylène de formule :

$$\begin{array}{l} CH_2 = CH\ CH_2OCH_2\ \underset{|}{CH}\ CH_2OCH_3 \\ \qquad\qquad\qquad\qquad (OCH_2CH_2)_{8,5}\text{-}\{OCH_2CH(CH_3)\}_{1,5}\text{-}OH \end{array}$$

à reflux pendant 30 minutes, le solvant étant ensuite éliminé à reflux pendant 2 heures. La teneur en ≡ SiH résiduelle est de 28 % par rapport à la teneur initiale. Le reflux est poursuivi pendant encore 2 heures pour aboutir à une teneur résiduelle en ≡ SiH de 19 %. Le mélange réactionnel est refroidi à 110 °C et on ajoute 42 ppm de catalyseur au platine. On chauffe et on porte de nouveau au reflux pendant 2 heures.

La teneur résiduelle en ≡ SiH est de 8 %.

Une mise au reflux pendant 3 heures 30 minutes élimine tous les ≡ SiH résiduels.

Le mélange réactionnel est refroidi à 80 °C.

On ajoute 2 g de bentonite, 2 g de charbon actif et 2 g d'eau, tout en agitant durant 90 minutes. On filtre sur CELITE® et on élimine le solvant sous reflux.

On obtient une huile ayant les caractéristiques suivantes :
- % résiduel ≡ SiH : 0
- équivalent en amine : 3 040
- viscosité à 25 °C : 172 mPa.s
- point trouble : 49 °C
(solution trouble à 15 °C qui est complètement claire à 25 °C).

**Revendications**

1. - Polydiorganosiloxane à fonction amino et polyoxyalkylène de formule moyenne :

```
R3 SiO(R SiO)m (R SiO)n (RSiO)p (R2SiO)qSiR3
          |        |       |
        (CH2)3   (CH2)3   OR"
          |        |                          (1)
          X        Y -(OC2H4)a(OC3H6)bOR'
          |
         NH2
```

dans laquelle :
R est choisi parmi les radicaux alkyle en $C_1$-$C_4$, phényle et trifluoro-3,3,3 propyle, au moins 80 % en nombre des radicaux R étant des radicaux méthyle,
X est choisi parmi une simple liaison covalente et le radical divalent de formule :
$- O - CH_2 - CH(OH) - CH_2 - NH - W -$ (2)
Y est choisi parmi une simple liaison covalente et le radical divalent de formule :
$- O - CH_2 - CH - CH_2OCH_3$ (3)
sous réserve que si p = 0 et X est une liaison covalente, Y est le radical de formule (3),
m varie de 1 à 25, de préférence de 1 à 10,
n varie de 1 à 25, de préférence de 1 à 10,
p varie de 0 à 15, de préférence de 1 à 5,
q varie de 5 à 500, de préférence de 10 à 400,
a varie de 0 à 150,
b varie de 0 à 150,
a + b varie de 5 à 200,
W est un radical hydrocarboné divalent ayant de 1 à 6 atomes de carbone,
R′ est choisi parmi un atome d'hydrogène, un radical alkyle en $C_1$-$C_6$, un radical acyle en $C_1$-$C_6$ et un radical phényle,
R″ est un radical alkyle linéaire ou ramifié en $C_1$-$C_6$.

2. - Polydiorganosiloxane selon la revendication 1, caractérisé en ce que R et R′ représentent le radical méthyle et W est $-(CH_2)_2-$.

3. - Procédé de préparation d'un polydiorganosiloxane tel que défini à la revendication 1 ou 2 et pour lequel X est une simple liaison covalente, caractérisé en ce qu'au cours d'une première étape on effectue l'hydrosilylation partielle d'un hydrogénopolydiorganosiloxane correspondant par l'allylamine puis au cours d'une deuxième étape, on effectue l'hydrosilylation de tout ou partie des groupes ≡ SiH résiduels par un polyoxyalkylène de formule :

```
CH2 = CHCH2OCH2CH CH2OCH3                 (6)
                |
                (OC2H4)a(OC3H6)b - OR'
```

dans laquelle R′, a et b ont la signification donnée ci-dessus, puis on fait réagir les éventuels groupes ≡ SiH résiduels sur l'alcool de formule R″OH, R″ ayant la signification donnée ci-dessus.

4. - Procédé de préparation d'un polydiorganosiloxane tel que défini à la revendication 1 ou 2 et pour lequel X est le radical divalent de formule :
$- O - CH_2 - CH(OH) - CH_2 - NH - (CH_2)_2-$
caractérisé en ce qu'au cours d'une première étape on hydrosilyle l'hydrogénopolydiorganosiloxane correspondant par un polyoxyalkylène de formule :
$CH = CH\ CH_2 - Y -(OC_2H_4)_a(OC_3H_6)_bOR'$
dans laquelle Y, R′, a et b ont la signification donnée ci-dessus, au cours d'une deuxième étape on hydrosilyle tout ou partie des groupes ≡ SiH résiduels par l'allylglycidyléther, on fait réagir les éventuels groupes ≡ SiH résiduels sur un alcool de formule R″OH et au cours d'une troisième étape on fait réagir une diamine de formule $H_2NWNH_2$, R″ et W ayant la signification donnée ci-dessus.

5. - Antimousse solide pour poudre à laver, caractérisé en ce qu'il comporte :
- 100 parties en poids d'une matrice choisie parmi un polyéthylène glycol, un copolymère polyoxyéthylène/polyoxypropylmène, un surfactant solide et une cire solide ainsi que leurs divers mélanges possibles,
- 10 à 80 parties d'une dispersion de silice de pyrogénation ou de précipitation dans une huile silicone,
- 10 à 20 parties d'un polymère de formule (1) tel que défini à la revendication 1 ou 2.

6. - Antimousse solide selon la revendication 5, caractérisé en ce que le surfactant solide est un sorbitan mono- ou tri-stéarate.

7. - Composition de rinçage pour textile comportant :
- une dispersion aqueuse d'au moins un tensio-actif organique cationique substantif au textile,
- une émulsion, une dispersion ou une solution aqueuse d'au moins un polymère de formule (1) tel que défini aux revendications 1 ou 2, le rapport pondéral du tensio-actif organique sur le polymère de formule (1) étant compris entre 3/1 et 1/20.

8. - Utilisation pour le traitement textile d'un polymère de formule (1) tel que défini aux revendications 1 ou 2, en masse, en dispersion aqueuse, en solution dans un solvant organique et éventuellement en association avec un $\alpha,\omega$-(dihydroxy)polydiorganosiloxane.

Office européen des brevets

# RAPPORT DE RECHERCHE EUROPEENNE

Numero de la demande

EP 90 42 0290

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
| --- | --- | --- | --- |
| X | US-A-4 409 267 (ICHINOHE et al.) * Revendications; colonne 2, ligne 46 - colonne 3, ligne 53; colonne 4, lignes 3-15; preparation 1; exemple 1 * | 1,2,4,8 | C 08 G 77/46<br>C 08 L 83/12<br>B 01 D 19/04<br>D 06 M 15/643 |
| Y | | 1,2,4 | |
| Y | EP-A-0 078 597 (TORAY SILICONE CO., LTD) * Revendications; page 12, paragraphe 2 * | 1,2 | |
| Y,D | GB-A-1 409 742 (IMPERIAL CHEMICAL INDUSTRIES LTD) * Revendications * | 4 | |
| A | | 3 | |
| Y | CHEMICAL ABSTRACTS, vol. 83, no. 8, 25 août 1975, page 51, résumé no. 59945d, Columbus, Ohio, US; & JP-A-49 040 398 (SHIN-ETSU CHEMICAL INDUSTRY CO., LTD) 15-04-1974 * Résumé * | 4 | |
| A | IDEM | 3 | |
| A | CHEMICAL ABSTRACTS, vol. 88, no. 6, 6 février 1978, page 63, résumé no. 39010v, Columbus, Ohio, US; & JP-A-77 103 498 (SHIN-ETSU CHEMICAL INDUSTRY CO., LTD) 30-08-1977 * Résumé * | 1-4 | |
| A | EP-A-0 306 007 (DOW CORNING K.K.) * Revendication 1 * | 1,5,6 | |

-/-

DOMAINES TECHNIQUES RECHERCHES (Int. Cl.5)

C 08 G
C 08 L
B 01 D
D 06 M

Le présent rapport a été établi pour toutes les revendications

| Lieu de la recherche | Date d'achèvement de la recherche | Examinateur |
| --- | --- | --- |
| LA HAYE | 28-09-1990 | HOLLENDER C.J.F. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

Office européen des brevets

# RAPPORT DE RECHERCHE EUROPEENNE

Numero de la demande

EP 90 42 0290

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-1 439 421 (MIDLAND SILICONES LTD)<br>* Résumé *<br>--- | 1,5,6 | |
| A,D | GB-A-2 201 433 (UNILEVER PLC)<br>* Revendications; page 3, ligne 15 - page 4, ligne 32 *<br>--- | 1,4,7,8 | |
| A,D | FR-A-2 318 268 (PROCTER & GAMBLE EUROPEAN TECHNICAL CENTER)<br>* Revendication 1 *<br>--- | 1,7 | |
| A,D | EP-A-0 058 493 (TORAY SILICONE CO., LTD)<br>* Revendications 1,2 *<br>----- | 1,8 | |
| | | | DOMAINES TECHNIQUES RECHERCHES (Int. Cl.5) |

Le présent rapport a été établi pour toutes les revendications

| Lieu de la recherche | Date d'achèvement de la recherche | Examinateur |
|---|---|---|
| LA HAYE | 28-09-1990 | HOLLENDER C.J.F. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant